# FASCICULE DE BREVET EUROPEEN

(11) **EP 3 309 066 B1**
(45) Date de publication et mention de la délivrance du brevet: **01.12.2021**
(21) Numéro de dépôt: 17196247.5
(22) Date de dépôt: 12.10.2017
(51) Int. Cl.: B64C 25/36

(54) **PROCEDE DE LIAISON ENTRE L'ARBRE D'UN TACHY-METRE ET UNE ROUE D'AERONEF**
VERFAHREN ZUR VERBINDUNG DER WELLE EINES DREHZAHLMESSERS MIT EINEM LUFTFAHRZEUGRAD
METHOD FOR LINKING THE SHAFT OF A TACHOMETER AND AN AIRCRAFT WHEEL

(30) Priorité: 13.10.2016 FR 1659914
(43) Date de publication de la demande: 18.04.2018
(73) Titulaire: Safran Landing Systems, 78140 Vélizy-Villacoublay (FR)
(72) Inventeur: EVENOR, Eric, 78140 VELIZY-VILLACOUBLAY (FR); RICHARD, Nathanaël, 78140 VELIZY-VILLACOUBLAY (FR); ROY, Alain, 78140 VELIZY-VILLACOUBLAY (FR)
(74) Mandataire: Lavialle, Bruno François Stéphane

(56) Documents cités:
- FR-A1- 2 825 322
- FR-A1- 2 835 060
- FR-A1- 2 885 699
- US-A- 3 540 232
- US-A- 3 960 248

## Description

L'invention concerne un procédé pour relier l'arbre d'un tachymètre et une roue d'aéronef.

### ARRIERE PLAN DE L'INVENTION

Dans le domaine des atterrisseurs d'aéronef, il est d'usage de mesurer la vitesse de rotation des roues freinées pour assurer la régulation du freinage. A cet effet, il est connu d'installer un tachymètre dans l'essieu dont l'arbre saille de l'essieu de sorte que son extrémité soit entraînée en rotation par un capot solidaire de la roue. Le tachymètre délivre un signal représentatif de la vitesse de rotation de la roue. A cet effet, le capot de roue comporte un logement central dans lequel l'extrémité de l'arbre du tachymètre est engagée. L'entraînement est assuré par la section non-circulaire (par exemple hexagonale ou cannelée) de l'extrémité de l'arbre du tachymètre et du logement. Il est apparu qu'à faible vitesse, le signal du tachymètre était parfois bruité au point de ne pouvoir être utilisé efficacement pour la régulation du freinage.

On a bien entendu tenté de filtrer le signal du tachymètre, mais le bruit est parfois tellement important qu'il masque complètement l'information utilisable.

Un exemple de l'art antérieur est fourni par le document FR2885699, où le dispositif d'accouplement d'un tachymètre et d'une roue d'avion comporte un manchon déformable élastiquement délimitant, à chaque extrémité axiale, une empreinte d'entraînement propre à coopérer avec un embout complémentaire reçu dans l'empreinte par emboîtement.

### OBJET DE L'INVENTION

L'invention vise à proposer un procédé de liaison entre l'arbre du tachymètre et la roue qui réduit le bruit du signal, notamment à faible vitesse de rotation.

### RESUME DE L'INVENTION

En vue de la réalisation de ce but, on propose un procédé de liaison entre une extrémité d'un arbre de tachymètre disposé dans un essieu d'atterrisseur et une roue montée à rotation sur ledit essieu, le procédé comportant l'étape d'équiper la roue d'un logement adapté à recevoir l'extrémité de l'arbre d'un tachymètre pour entraîner l'arbre en rotation avec la roue, le logement recevant selon l'invention un organe d'appui saillant à l'intérieur du logement pour être repoussé par l'extrémité de l'arbre à l'encontre d'un organe élastique pour rattraper tout jeu en rotation entre l'extrémité de l'arbre et le logement.

Grâce au rattrapage de jeu ainsi mis en œuvre selon l'invention, on a constaté une réduction spectaculaire du bruit perturbant le signal du tachymètre aux basses vitesses, à tel point que des tachymètres réformés selon les critères de réception actuels délivrent de nouveau des signaux parfaitement utilisables pour la régulation de freinage.

Selon une caractéristique particulière, le logement comporte une entrée cannelée suivie d'un réceptacle pour un manchon monté tournant dans le réceptacle. L'organe d'appui est un ergot intérieur au manchon et l'organe élastique comporte un ressort de torsion agissant sur le manchon pour le rappeler vers une position dans laquelle l'ergot s'étend entre deux cannelures lorsque l'extrémité n'est pas engagée dans le logement.

Selon une autre caractéristique particulière, le logement est ménagé dans le corps creux d'une douille comportant une collerette pour la fixation de la douille à un capot solidaire de la roue.

L'invention est également relative à une douille destinée à être rapportée sur le capot de roue d'aéronef pour recevoir et entraîner une extrémité d'un arbre de tachymètre logé dans un essieu d'atterrisseur portant la roue. La douille comporte un corps creux définissant un logement dans lequel l'extrémité est reçue. Le logement comporte une entrée de section homologue à celle de l'extrémité suivie d'un réceptacle cylindrique recevant un manchon qui vient en continuité de l'entrée du logement pour recevoir l'extrémité et qui est monté à rotation dans le réceptacle. Le manchon comporte un organe d'appui saillant vers l'intérieur du manchon qui s'étend de façon à être repoussé par l'extrémité quand celle-ci est engagée dans le logement à l'encontre d'un effort de rappel exercé par un organe élastique pour rattraper tout jeu en rotation entre l'extrémité de l'arbre et le logement.

### BREVE DESCRIPTION DES DESSINS

L'invention sera mieux comprise à la lumière de la description qui suit d'un mode de mise en œuvre de l'invention, en référence aux figures des dessins annexés parmi lesquelles :

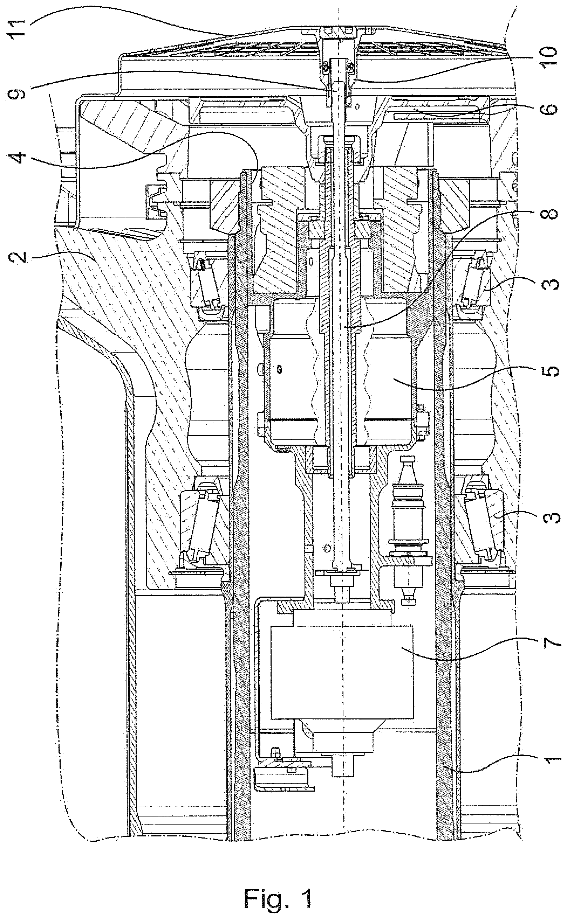

- la figure 1 est une vue en coupe d'un essieu d'atterrisseur équipé de sa roue et d'un tachymètre, avec la douille d'entraînement selon l'invention placé sur le capot de roue ;
- la figure 2 est une vue éclatée d'une douille selon l'invention ;
- la figure 3 est une vue en coupe de la douille de la figure 2 ;
- les figures 4A et 4B sont des vues de face montrant l'intérieur du logement de la douille, avant l'introduction de l'extrémité de l'arbre du tachymètre, et après son introduction.

### DESCRIPTION DETAILLEE DE L'INVENTION

L'invention s'applique à un atterrisseur dont on voit un essieu 1 qui reçoit une roue 2 dont on aperçoit ici la jante munie de ses roulements 3. A l'intérieur de l'essieu 1 est insérée une cartouche 4 comportant un moteur 5 d'entraînement d'un ventilateur 6, et, à l'arrière du moteur 5, un tachymètre 7 dont on voit l'arbre 8 traverser le moteur 5, le ventilateur 6 pour déboucher à l'extérieur de l'essieu 1. L'arbre 8 a une extrémité cannelée 9 qui est engagée dans une douille 10 solidarisée à un capot 11 de protection de la roue qui lui est solidaire. Ainsi, la rotation de la roue entraîne la rotation de l'arbre 8, ce qui conduit le tachymètre 7 à générer un signal représentatif de la vitesse de la rotation de la roue.

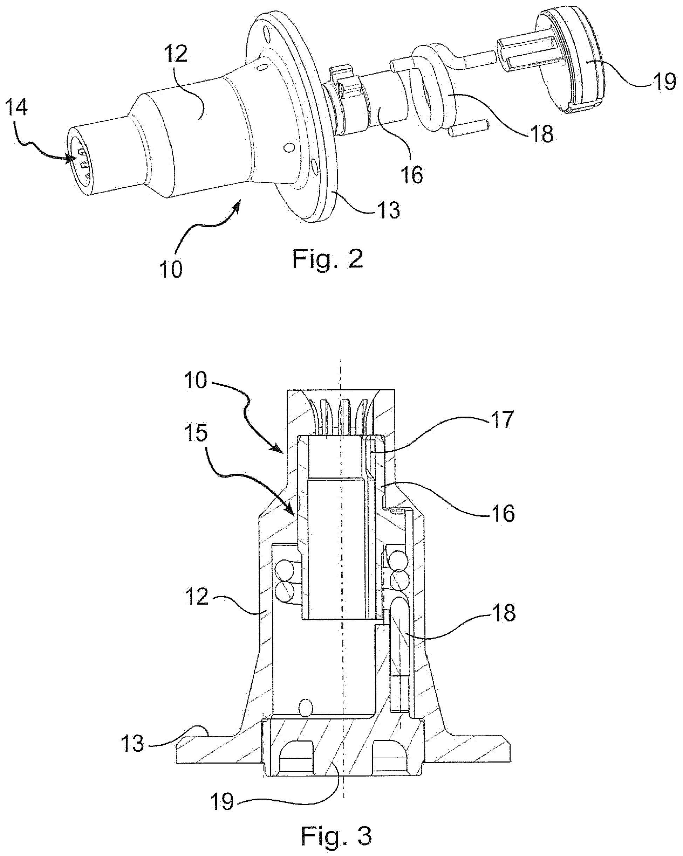

En référence aux figures 2 et 3, la douille 10 comporte un corps creux 12 terminé par une collerette 13 permettant son vissage sur le capot 11. Le corps creux 12 définit un logement 14 ayant une entrée cannelée pour recevoir l'extrémité 9 de l'arbre 8. Après l'entrée, le logement 14 définit un réceptacle cylindrique 15 qui reçoit un manchon 16 qui vient en continuité de l'entrée du logement 14 pour recevoir l'extrémité 9 de l'arbre 8. Le manchon 16 comporte un ergot 17 intérieur. Le manchon 16 est monté tournant dans le réceptacle cylindrique 15 en étant relié à un bouchon 19 qui ferme l'intérieur du corps creux 12 au moyen d'un ressort de torsion 18 qui rappelle le manchon 16 vers une une position angulaire dans laquelle l'ergot 17 saille entre deux cannelures de l'entrée du logement 14 lorsque l'extrémité 9 de l'arbre 8 n'est pas engagée dans le logement.

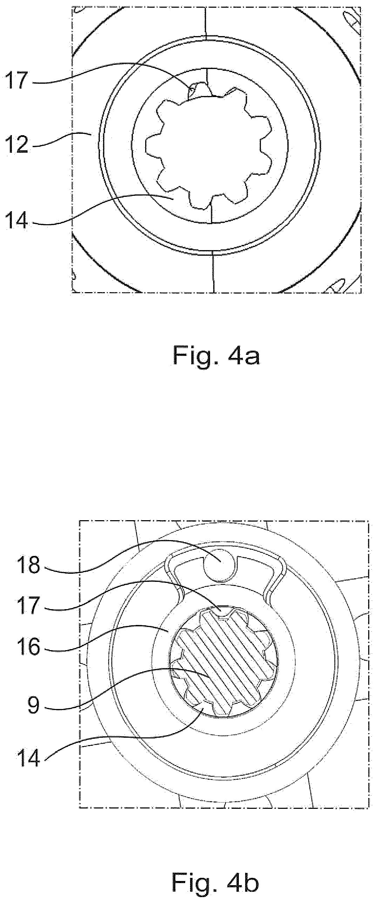

La figure 4A montre l'ergot 17 qui saille entre deux cannelures du logement. Lors de l'introduction de l'extrémité cannelée 9 de l'arbre 8 illustrée à la figure 4B, les cannelures de l'extrémité 9 passent dans les cannelures homologues de l'entrée du logement 14, puis, continuant à pénétrer, repoussent l'ergot 17, obligeant ainsi le manchon 16 à tourner dans son réceptacle 15 à l'encontre d'un effort de rappel exercé par le ressort de torsion 18. Par réaction, l'ergot 17 appuie sur les cannelures de l'extrémité 9 de l'arbre 8 pour les plaquer contre les cannelures homologues du logement 14, rattrapant ainsi tout jeu entre les cannelures du logement 14 et les cannelures de l'extrémité 9. Cette disposition entraîne une diminution notable du bruit parasitant le signal du tachymètre.

On remarquera que l'entrée du logement 14 est de forme évasée, permettant un léger rotulage de l'extrémité 9 de l'arbre 8 dans le logement 14, ce qui contribue encore à diminuer les contraintes sur l'arbre 8 et ainsi diminuer la production de bruit parasitant le signal du tachymètre. Toujours pour permettre ce léger rotulage, la longueur des cannelures du logement 14 ont été réduites au strict minimum, pour s'accommoder d'un léger angle entre l'axe de l'arbre 8 et l'axe central du logement 14. Ces dispositions permettent d'absorber une flexion de l'essieu à l'atterrissage et au roulage, due aux efforts que le sol applique à la roue portée par l'essieu.

L'invention n'est pas limitée à ce qui vient d'être décrit mais englobe toute variante entrant dans le cadre défini par les revendications.

En particulier, bien qu'ici le logement fasse partie d'une douille 10 rapportée sur le capot de roue, on pourra de façon plus générale équiper la roue d'un logement avec un organe d'appui venant en appui sur l'extrémité de l'arbre à l'encontre de l'action d'un organe élastique pour rattraper tout jeu entre l'extrémité de l'arbre et le logement.

## Revendications

1. Procédé de liaison entre une extrémité (9) d'un arbre (8) de tachymètre (7) disposé dans un essieu d'atterrisseur (1) et une roue (2) montée à rotation sur ledit essieu, le procédé comportant l'étape d'équiper la roue d'un logement (14) adapté à recevoir l'extrémité de l'arbre d'un tachymètre pour entraîner l'arbre en rotation avec la roue, le logement recevant un organe d'appui (17) saillant à l'intérieur du logement pour être repoussé par l'extrémité de l'arbre à l'encontre d'un organe élastique (18) pour rattraper tout jeu en rotation entre l'extrémité de l'arbre et le logement.

2. Procédé selon la revendication 1, dans lequel le logement comporte une entrée cannelée suivie d'un réceptacle (15) pour un manchon (16) monté tournant dans le réceptacle, l'organe d'appui étant un ergot intérieur au manchon, l'organe élastique comportant un ressort de torsion agissant sur le manchon pour le rappeler vers une position dans laquelle l'ergot s'étend entre deux cannelures lorsque l'extrémité n'est pas engagée dans le logement.

3. Procédé selon la revendication 1, dans lequel le logement est ménagé dans le corps creux (12) d'une douille (10) comportant une collerette (13) pour la fixation de la douille à un capot solidaire de la roue.

4. Douille destinée à être rapportée sur un capot de roue d'aéronef pour recevoir et entraîner une extrémité (9) d'un arbre de tachymètre logé dans un essieu d'atterrisseur portant la roue, la douille comportant un corps creux (12) définissant un logement dans lequel l'extrémité est reçue, le logement ayant une entrée de section homologue à celle de l'extrémité suivie d'un réceptacle cylindrique (15) qui reçoit un manchon (16) qui vient en continuité de l'entrée du logement (14) pour recevoir l'extrémité (9) et qui est monté à rotation dans le réceptacle, le manchon ayant un organe d'appui saillant vers l'intérieur du manchon qui s'étend de façon à être repoussé par l'extrémité quand celle-ci est engagée dans le logement à l'encontre d'un effort de rappel exercé par un organe élastique (18) pour rattraper tout jeu en rotation entre l'extrémité de l'arbre et le logement.

## Patentansprüche

1. Verfahren zur Verbindung eines Endes (9) einer Welle (8) eines Drehzahlmessers (7), die in einer Fahrwerkachse (1) angeordnet ist, mit einem Rad (2), das drehbar auf der genannten Achse gelagert ist, wobei das Verfahren den Schritt des Ausrüstens des Rades mit einer Aufnahme (14) umfasst, die geeignet ist, das Ende der Welle eines Drehzahlmessers aufzunehmen, um die Welle in Drehung mit dem Rad anzutreiben, wobei die Aufnahme ein Anlageorgan (17) aufnimmt, das im Inneren der Aufnahme vorsteht, um von dem Ende der Welle entgegen eines elastischen Organs (18) zurückgedrückt zu werden, um jegliches Rotationsspiel zwischen dem Ende der Welle und der Aufnahme zu beseitigen.

2. Verfahren nach Anspruch 1, bei dem die Aufnahme einen mit Rillen versehenen Eingang gefolgt von einer Aufnahme (15) für eine Hülse (16) umfasst, die drehbar in der Aufnahme gelagert ist, wobei das Anlageorgan eine Nase im Inneren der Hülse ist, wobei das elastische Organ eine Torsionsfeder umfasst, die auf die Hülse einwirkt, um sie in eine Position rückzustellen, in der sich die Nase zwischen zwei Rillen erstreckt, wenn das Ende nicht mit der Aufnahme in Eingriff steht.

3. Verfahren nach Anspruch 1, bei der die Aufnahme in dem hohlen Körper (12) einer Buchse (10) ausgebildet ist, die einen Kragen (13) für die Befestigung der Buchse an einer fest mit dem Rad verbundenen Abdeckung umfasst.

4. Buchse, die dazu bestimmt ist, an einer Radabdeckung eines Luftfahrzeugs befestigt zu werden, um ein Ende (9) einer Welle eines Drehzahlmessers aufzunehmen und anzutreiben, die in einer das Rad tragenden Fahrwerkachse aufgenommen ist, wobei die Buchse einen hohlen Körper (12) umfasst, der eine Aufnahme definiert, in der das Ende aufgenommen ist, wobei die Aufnahme einen Eingang mit einem Querschnitt hat, der übereinstimmend mit dem des Endes ist, gefolgt von einer zylindrischen Aufnahme (15), die eine Hülse (16) aufnimmt, die in Kontinuität mit dem Eingang der Aufnahme (14) kommt, um das Ende (9) aufzunehmen, und die drehbar in der Aufnahme gelagert ist, wobei die Hülse ein ins Innere der Hülse vorstehendes Anlageorgan hat, das sich derart erstreckt, dass es von dem Ende zurückgedrückt wird, wenn dieses mit der Aufnahme entgegen einer Rückstellkraft, die von einem elastischen Organ (18) ausgeübt wird, in Eingriff steht, um jegliches Rotationsspiel zwischen dem Ende der Welle und der Aufnahme zu beseitigen.

## Claims

1. Method for linking an end (9) of a shaft (8) of a tachometer (7) positioned in a landing gear hub (1) and a wheel (2) mounted to rotate on said hub, the method comprising a step of equipping the wheel with a housing (14) suitable for receiving the end of the shaft of a tachometer to drive the shaft in rotation with the wheel, the housing receiving a bearing member (17) protruding inside the housing to be pushed back by the end of the shaft against an elastic member (18) to take up any rotational play between the end of the shaft and the housing.

2. Method according to Claim 1, in which the housing comprises a splined input followed by a receptacle (15) for a sleeve (16) mounted to revolve in the receptacle, the bearing member being a snug inside the sleeve, the elastic member comprising a torsion spring acting on the sleeve to return it to a position in which the snug extends between two splines when the end is not engaged in the housing.

3. Method according to Claim 1, in which the housing is formed in the hollow body (12) of a bush (10) comprising a flange (13) for fixing the bush to a cap secured to the wheel.

4. Bush intended to be added to an aircraft wheel cap to receive and drive an end (9) of a tachometer shaft housed in a landing gear hub bearing the wheel, the bush comprising a hollow body (12) defining a housing in which the end is received, the housing having an input of section matching that of the end followed by a cylindrical receptacle (15) which receives a sleeve (16) which comes into continuity with the input of the housing (14) to receive the end (9) and which is mounted to rotate in the receptacle, the sleeve having a bearing member protruding towards the interior of the sleeve which extends so as to be pushed back by the end when the latter is engaged in the housing against a return force exerted by an elastic member (18) to take up any rotational play between the end of the shaft and the housing.
